# EUROPEAN PATENT APPLICATION

(11) **EP 4 760 102 A1**
(43) Date of publication of application: **17.06.2026**
(21) Application number: 25810956.0
(22) Date of filing: 09.09.2025
(51) Int. Cl.: F04C 29/04, F04C 18/16, F04C 29/00, H02K 7/14

(54) **SCREW COMPRESSOR AND REFRIGERATION DEVICE**

(30) Priority: 18.09.2024 JP 2024161484
(71) Applicant: DAIKIN INDUSTRIES, LTD., Osaka-Shi, Osaka 530-0001 (JP)
(72) Inventor: TAKAHASHI, Kazuhei, Osaka-shi, Osaka 530-0001 (JP)
(74) Representative: Goddar, Heinz J.
(86) International application number: PCT/JP2025/031902
(87) International publication number: WO 2026/063297

(57) **Abstract**

A screw compressor includes a compression mechanism including a screw rotor and configured to compress a refrigerant; a rotation shaft to which the screw rotor is fixed; a motor configured to rotate the rotation shaft; and a casing having a suction chamber configured to introduce the refrigerant from outside, a rotor chamber configured to house the compression mechanism, and a motor chamber configured to house the motor and positioned between the suction chamber and the rotor chamber, wherein the rotation shaft includes a first flow path that communicates with the suction chamber and that extends along a first direction that is an axial direction; and a second flow path that communicates with the motor chamber and the first flow path and that extends along a second direction intersecting the first direction.

## Description

### Technical Field

The present disclosure relates to a screw compressor and refrigeration apparatus.

### Background Art

Patent Document 1 discloses a compressor in which a motor and a compression rotor of a compression unit are sequentially arranged in a casing from a suction port side. Patent Document 1 discloses that the reliability of the motor is improved by preventing a local temperature rise at the tip of the coil end by cooling the entire coil end with fluid, by causing the fluid, which is taken in from the suction port, to flow along the circumference of the coil end.

### Citation List

### Patent Document

Patent document 1: Japanese Unexamined Patent Application Publication No. 2005-057916

### Summary of Invention

### Technical Problem

In a screw compressor, when the specific gravity of the refrigerant gas is low, the temperature of the refrigerant gas rises greatly in the process of cooling the motor. Because the temperature of the refrigerant gas rises greatly, the temperature of the motor may rise downstream of the motor.

The present discloser provides a screw compressor which enhances the cooling effect of the motor by the refrigerant.

### Solution to Problem

A screw compressor according to a first aspect includes:
a compression mechanism including a screw rotor and configured to compress a refrigerant;
a rotation shaft to which the screw rotor is fixed;
a motor configured to rotate the rotation shaft; and
a casing having a suction chamber configured to introduce the refrigerant from outside, a rotor chamber configured to house the compression mechanism, and a motor chamber configured to house the motor and positioned between the suction chamber and the rotor chamber, wherein
the rotation shaft includes:
   a first flow path that communicates with the suction chamber and that extends along a first direction that is an axial direction; and
   a second flow path that communicates with the motor chamber and the first flow path and that extends along a second direction intersecting the first direction.

According to the screw compressor of the first aspect, the cooling effect of the motor by the refrigerant can be enhanced.

The screw compressor according to a second aspect is the screw compressor according to the first aspect, wherein the rotation shaft includes a plurality of the second flow paths.

According to the screw compressor of the second aspect, the cooling effect of the motor can be further enhanced by discharging the refrigerant from a plurality of locations.

The screw compressor according to a third aspect is the screw compressor according to the second aspect, wherein the plurality of the second flow paths have different positions in the first direction.

According to the screw compressor of the third aspect, the cooling effect of the motor can be further enhanced by discharging the refrigerant in a wider range.

The screw compressor according to a fourth aspect is the screw compressor according to the second or third aspect, wherein the plurality of second flow paths have different positions in a circumferential direction of the rotation shaft.

According to the screw compressor of the fourth aspect, the cooling effect of the motor can be further enhanced in the circumferential direction by discharging the refrigerant in a wider range in the circumferential direction.

The screw compressor according to a fifth aspect is the screw compressor according to any one of the second to fourth aspects, wherein the plurality of second flow paths have different diameters.

According to the screw compressor of the fifth aspect, the cooling of the motor can be done more efficiently by, for example, changing the amount of the refrigerant discharged in accordance with the degree of temperature rise.

The screw compressor according to a sixth aspect is the screw compressor according to any one of the first to fifth aspects, wherein the second flow paths are inclined so as to intersect a plane perpendicular to the rotation shaft.

According to the screw compressor according to the sixth aspect, the cooling of the motor can be done more efficiently by expanding the region in which the refrigerant is discharged.

The screw compressor according to a seventh aspect is the screw compressor according to any one of the first to sixth aspects, wherein the first flow path is provided at a position eccentric to an axial center of the rotation shaft.

According to the screw compressor according to the seventh aspect, the cooling of the motor can be done more efficiently by increasing the amount of the refrigerant discharged by providing the first flow path at a position eccentric to the axial center of the rotation shaft.

The screw compressor according to an eighth aspect is the screw compressor according to any one of the first to seventh aspects, wherein the refrigerant includes at least one of R1234ze, R1234yf, ammonia, or propane as a refrigerant component.

The screw compressor according to a ninth aspect is the screw compressor according to any one of the first to eighth aspects, wherein the screw compressor is operated under a condition where the compression ratio is 7 or more.

A refrigeration apparatus according to a first aspect includes:
the screw compressor according to any one of the first to ninth aspects.

### Brief Description of Drawings

[FIG. 1] FIG. 1 is a refrigerant circuit diagram of a refrigeration apparatus using a screw compressor according to the present embodiment.
[FIG. 2] FIG. 2 is a graph illustrating an example of an operation range of a refrigeration apparatus using a screw compressor according to the present embodiment.
[FIG. 3] FIG. 3 is a cross-sectional view of a screw compressor according to the present embodiment.
[FIG. 4] FIG. 4 is an enlarged cross-sectional view around a rotation shaft in a screw compressor according to the present embodiment.
[FIG. 5] FIG. 5 is an enlarged cross-sectional view around a rotation shaft in a first modified example of a screw compressor according to the present embodiment.
[FIG. 6] FIG. 6 is an enlarged cross-sectional view around a rotation shaft in a second modified example of the screw compressor according to the present embodiment.
[FIG. 7] FIG. 7 is an enlarged cross-sectional view around a rotation shaft in a third modified example of the screw compressor according to the present embodiment.
[FIG. 8] FIG. 8 is an enlarged cross-sectional view around a rotation shaft in a fourth modified example of the screw compressor according to the present embodiment.

### Description of Embodiments

<Refrigeration apparatus>

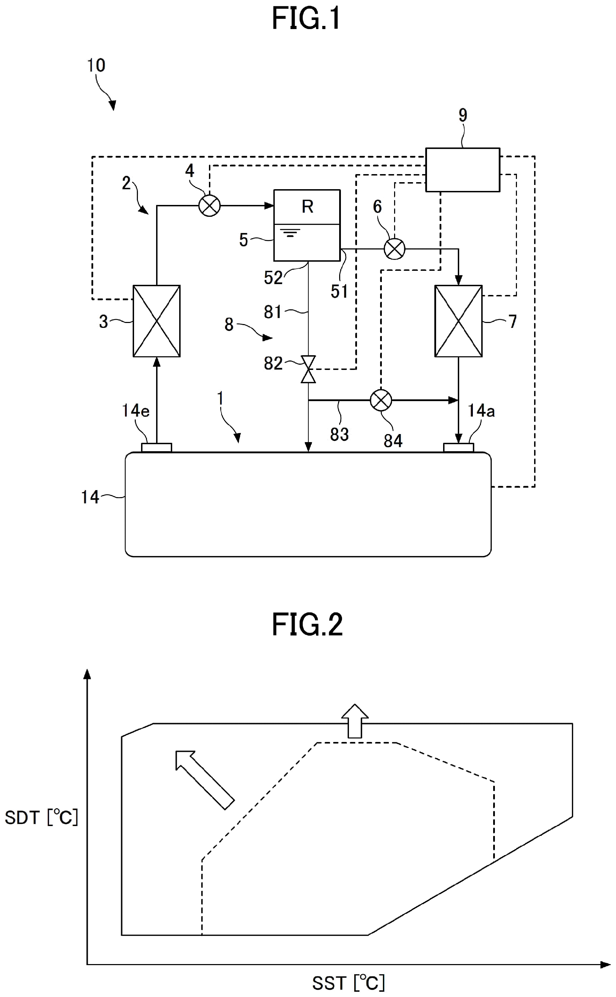

A refrigeration apparatus using a screw compressor according to the present embodiment will be described. FIG. 1 is a circuit diagram of a refrigerant of a refrigeration apparatus 10 using a screw compressor 1, which is an example of the screw compressor according to the present embodiment. The refrigeration apparatus 10 is, for example, a water heater or a chiller unit. The refrigeration apparatus 10 may be, for example, an air conditioner.

The refrigeration apparatus 10 has a refrigerant circuit 2 filled with a refrigerant R. The refrigerant R contains, for example, at least one of R454C, R134a, R32, R1234ze, R1234yf, ammonia, or propane as a refrigerant component. The refrigeration apparatus 10 performs a vapor compression type refrigerating cycle. The refrigerant circuit 2 includes a screw compressor 1, a condenser 3, a first expansion valve 4, a gas-liquid separator 5, a second expansion valve 6, an evaporator 7, an injection mechanism 8 and a controller 9. In FIG. 1, solid arrows indicate a flow of the refrigerant R in the refrigerant circuit 2, and dotted lines indicate electrical connections between the controller 9 and respective parts.

The screw compressor 1 includes a generally cylindrical casing 14 provided with a suction port 14a and a discharge port 14e. The screw compressor 1 compresses the refrigerant R in a low-pressure gas state taken in from the suction port 14a, and discharges the refrigerant R in a high-pressure gas state from the discharge port 14e. Details of the screw compressor 1 will be described later.

The refrigerant R in the state of high-pressure gas discharged from the discharge port 14e of the screw compressor 1 is condensed by releasing heat in the condenser 3. The refrigerant R condensed in the condenser 3 to become a high-pressure liquid refrigerant is depressurized by the first expansion valve 4. The refrigerant R depressurized by the first expansion valve 4 is gas-liquid separated by the gas-liquid separator 5 and stored at the bottom of the gas-liquid separator 5. The refrigerant R in the state of liquid refrigerant stored at the bottom of the gas-liquid separator 5 flows out from the refrigerant outlet 51 of the gas-liquid separator 5 and is depressurized by the second expansion valve 6. The refrigerant R depressurized by the second expansion valve 6 is evaporated by absorbing heat in the evaporator 7. The refrigerant R evaporated by the evaporator 7 is taken in in a state of low-pressure gas from the suction port 14a of the screw compressor 1.

The injection mechanism 8 includes an injection pipe 81, a solenoid valve 82, a branch pipe 83, and a flow control valve 84. One end of the injection pipe 81 is connected to an injection port 52 provided at the bottom of the gas-liquid separator 5. The other end of the injection pipe 81 is connected to the casing 14 of the screw compressor 1. The solenoid valve 82 is provided partway along the injection pipe 81. The solenoid valve 82 is opened and closed under control by a controller 9. The branch pipe 83 branches from the injection pipe 81 between the solenoid valve 82 and the screw compressor 1. The branch pipe 83 is connected to a refrigerant circuit between the evaporator 7 and the screw compressor 1. The flow control valve 84 is provided partway along the branch pipe 83. The opening of the flow control valve 84 is controlled by a controller 9 so that the opening is adjusted.

When the temperature of the refrigerant R discharged from the screw compressor 1 exceeds a predetermined threshold value, the controller 9 opens the solenoid valve 82 to supply the refrigerant R in a liquid refrigerant state to the screw compressor 1. The controller 9 also adjusts the opening of the flow control valve 84 according to the temperature of the refrigerant R discharged from the screw compressor 1, for example. The controller 9 adjusts the amount of the refrigerant R supplied to the screw compressor 1 by the injection mechanism 8. The controller 9 controls the temperature of the refrigerant R discharged from the screw compressor 1.

FIG. 2 is a graph illustrating an example of the operation range of a refrigeration apparatus 10 using the screw compressor 1, which is an example of the screw compressor according to the present embodiment. In the graph of FIG. 2, the horizontal axis represents the saturation suction temperature (SST), and the vertical axis represents the saturation discharge temperature (SDT). In FIG. 2, the broken line represents the operation range of a conventional screw compressor using R134a as the refrigerant. In FIG. 2, the solid line represents the operation range of the screw compressor 1 using, for example, R454C as the refrigerant R.

In response to increasing demand for substituting gas boilers with heat pump chillers due to international decarbonization efforts and uncertainty in the energy situation, it is required to improve the performance of the refrigeration apparatus 10 that can also be used as a heat pump chiller. Specifically, as illustrated by arrows in FIG. 2, it is required to expand the operation range of the screw compressor 1 mounted in the refrigeration apparatus 10 to an operation range of lower SST and higher SDT than that of conventional screw compressors, that is, a range of lower outside air temperature and higher outlet water temperature. For example, the screw compressor according to the present embodiment is required to be operated under a condition where the compression ratio is 7 or more. Further, for example, the screw compressor according to the present embodiment is required to be operated under a condition where the saturated suction temperature (SST) is less than 25 °C. Further, for example, the screw compressor according to the present embodiment is required to be operated under a condition where the saturated discharge temperature (SDT) is higher than 68 °C. or a condition where the saturated discharge temperature (SDT) is higher than 75 °C.

### <Embodiment>

The screw compressor according to the present embodiment will be described below with reference to the drawings. It is intended that the present disclosure is not limited to these examples, but is indicated by the claims and includes all modified examples within the meaning and scope equivalent to the claims.

With respect to the description and drawings according to each embodiment, components having substantially the same or corresponding functional configurations may be given the same reference numerals to omit redundant descriptions. To facilitate understanding, the scale of each part in the drawings may be different from the actual scale.

The directions such as parallel, right angle, orthogonal, horizontal, perpendicular, vertical, lateral, longitudinal, and so on are allowed to deviate to a degree that does not impair the effect of the embodiment. The shape of the corner portion is not limited to a right angle and may be rounded. The terms parallel, right angle, orthogonal, horizontal, and perpendicular may include substantially parallel, substantially right angle, substantially orthogonal, substantially horizontal, and substantially perpendicular, respectively.

For example, substantially parallel means that even if two lines or two surfaces are not completely parallel to each other, they can be treated as parallel to each other within a range permitted in manufacturing. Similarly to substantially parallel, it is intended that each of the other substantially right angle, substantially orthogonal, substantially horizontal, and substantially perpendicular may correspond to each of them as long as the positional relationship between the two lines or the two surfaces is within a range permitted in manufacturing.

A screw compressor according to the present embodiment includes a compression mechanism that has a screw rotor and that compresses a refrigerant, a rotation shaft to which the screw rotor is fixed, a motor for rotating the rotation shaft, and a casing. The casing in the screw compressor according to the present embodiment includes a suction chamber for introducing a refrigerant from the outside, a rotor chamber for housing the compression mechanism, and a motor chamber for housing a motor and positioned between the suction chamber and the rotor chamber. The rotation shaft of the screw compressor according to the present embodiment has a first flow path communicating with the suction chamber and extending along a first axial direction, and a second flow path communicating with the motor chamber and the first flow path and extending along a second direction intersecting the first direction.

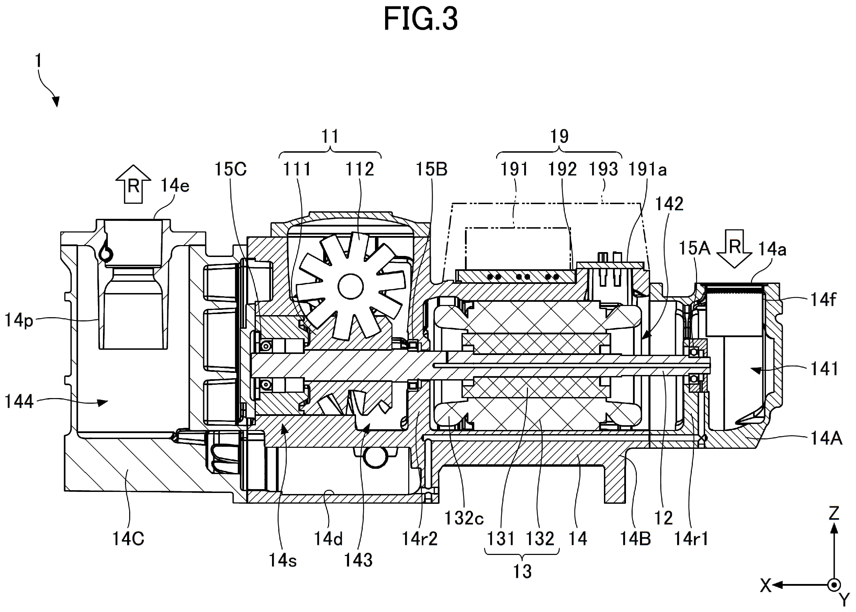

FIG. 3 is a sectional view of a screw compressor 1 as an example of the screw compressor according to the present embodiment.

A virtual three-dimensional coordinate system (XYZ orthogonal coordinate system) composed of the X-axis, the Y-axis and the Z-axis (XYZ axis) orthogonal to each other may be set in the drawing for convenience of explanation. For example, with respect to a coordinate axis perpendicular to the paper surface of the drawing, when a black circle is indicated in a circle of the coordinate axis, it indicates that the coordinate axis faces toward the front side with respect to the paper surface. When a cross is indicated in a circle of the coordinate axis, it indicates that the coordinate axis faces toward the rear side with respect to the paper surface.

However, this coordinate system is provided for the purpose of explanation and does not limit the posture of the screw compressor or the like according to the present embodiment.

In the following drawings, the X-axis direction is a direction in which the rotation shaft 12 extends.

The screw compressor 1 compresses the refrigerant R in a low-pressure gas state. As described above, the screw compressor 1 includes a generally cylindrical casing 14 provided with the suction port 14a and a discharge port 14e. The screw compressor 1 compresses the refrigerant R in a low-pressure gas state sucked from the suction port 14a. The screw compressor 1 then discharges the refrigerant R in a high-pressure gas state from the discharge port 14e.

The screw compressor 1 includes a compression mechanism 11, a rotation shaft 12, a motor 13, a casing 14, a first bearing 15A, a second bearing 15B, and a third bearing 15C. The screw compressor 1 also includes an inverter unit 19.

The screw compressor 1 has a configuration for solving the following problems. In the operation range of the screw compressor 1 illustrated by the solid line in FIG. 2, in the operation range of the lower SST and higher SDT than the operation range of the conventional screw compressor illustrated by the broken line, the density of the refrigerant R to be sucked decreases, and the weight flow rate of the refrigerant R decreases. When the weight flow rate of the refrigerant R decreases, the heat capacity of the refrigerant R, which is the cooling medium of the motor, decreases, so that the cooling ability of the motor 13 by the refrigerant R decreases. Therefore, the temperature of the motor 13 increases, and there is a possibility of failure or shortening of the service life.

Hereinafter, the structure of each part of the screw compressor 1 for solving the above-mentioned problem will be described in detail.

The casing 14 has a suction chamber 141, a motor chamber 142, a rotor chamber 143, and a discharge chamber 144.

The casing 14 is configured to be divided into 3 parts: a first portion 14A forming the suction chamber 141, a second portion 14B forming the motor chamber 142 and the rotor chamber 143, and a third portion 14C forming the discharge chamber 144. That is, the screw compressor 1 has a semi-closed configuration.

The first portion 14A of the casing 14 forming the suction chamber 141 is provided with the suction port 14a through which the refrigerant R in the state of low-pressure gas flowing out from the evaporator 7 is sucked. For example, a bottomed cylindrical filter 14f is attached to the suction port 14a. When the refrigerant R is compressed by the compression mechanism 11, the suction chamber 141 sucks the refrigerant R in the state of low-pressure gas through the suction port 14a and the filter 14f. The first portion of the casing 14 has a plurality of ribs 14r1 radially extending in the radial direction of the rotation shaft 12 with the rotation shaft 12 as a center. The radial ribs 14r1 support the first bearing 15A at a central portion thereof.

The motor chamber 142 is provided adjacent to the suction chamber 141. The motor chamber 142 accommodates the motor 13. The motor 13 includes a rotor 131 fixed to a rotation shaft 12, and a stator 132 arranged around the rotor 131. A permanent magnet is embedded in the rotor 131. A coil is wound around the stator 132. Coil ends 132c are formed at respective ends of the stator 132 in the axial direction (X-axis direction) of the rotation shaft 12, by coils protruding from respective ends of the stator 132.

The motor chamber 142 has, for example, a cylindrical inner wall surface having a predetermined interval from the outer peripheral surface of the stator 132, and a plurality of protruding portions protruding radially inward from the inner wall surface and supporting the stator 132. The plurality of protruding portions of the motor chamber 142 supporting the stator 132 are provided at equal intervals in the radial direction of the inner peripheral surface of the motor chamber 142 and extend along the rotation shaft 12.

An inverter unit 19 is provided on a second portion of the casing 14 forming the motor chamber 142. The inverter unit 19 has, for example, an inverter 191 for supplying power to the motor 13, a cooling portion 192 for cooling the inverter 191, and a cover 193 for covering them. In FIG. 3, the inverter 191 and the cover 193 are not illustrated, and their schematic shapes are illustrated by two-dot chain lines.

The inverter 191 is connected to the motor 13 via, for example, a terminal portion 191a. The inverter 191 supplies electric power to the motor 13. The cooling portion 192 is, for example, a plate-like member made of metal having excellent thermal conductivity. The cooling portion 192 has a flow path for passing the refrigerant R in a liquid refrigerant state supplied from the injection mechanism 8 illustrated in FIG. 1 to the screw compressor 1. The cover 193 is, for example, a member made of resin for covering the inverter 191 and the cooling portion 192. The cover 193 is attached to the second portion 14B of the casing 14.

The rotor chamber 143 is provided adjacent to the motor chamber 142. The rotor chamber 143 accommodates a compression mechanism 11. The compression mechanism 11 includes a screw rotor 111. The compression mechanism 11 compresses the refrigerant R. More specifically, the compression mechanism 11 includes a screw rotor 111 fixed to a rotation shaft 12, and a gate rotor 112 which engages with a helical groove provided in the screw rotor 111 and rotates about an axis perpendicular to the rotation shaft 12.

As the screw rotor 111 rotates, the compression mechanism 11 compresses the refrigerant R by sucking the refrigerant R into a compression chamber formed by the helical groove of the screw rotor 111, the gate rotor 112, and a cylindrical inner wall surface provided in the second portion of the casing 14. When the compression of the refrigerant R is completed, the compression chamber is connected to the discharge chamber 144 via passages provided in the second portion 14B and the third portion 14C of the casing 14.

The second portion 14B of the casing 14 has a plurality of ribs 14r2 radially provided between the motor chamber 142 and the rotor chamber 143, similar to the plurality of ribs 14r1 provided in the first portion 14A of the casing 14. The plurality of radial ribs 14r2 support the second bearing 15B at its center. The second portion 14B of the casing 14 supports the third bearing 15 C via a support member 14s. The support member 14s is supported by an inner wall of the second portion 14B of the casing 14 forming a compression chamber together with the compression mechanism 11, and is arranged adjacent to a partition wall of the third portion 14C of the casing 14.

The refrigerant R flowing into the motor chamber 142 from the suction chamber 141 passes between the inner peripheral surface of the motor chamber 142 and the stator 132 and between the rotor 131 and the stator 132. The refrigerant R passing between the inner peripheral surface of the motor chamber 142 and the stator 132 and between the rotor 131 and the stator 132 flows into the rotor chamber 143 while cooling the motor 13. The refrigerant R in a high-pressure gas state compressed in the compression chamber of the compression mechanism 11 is discharged to the discharge chamber 144 through passages provided in the second portion 14B and the third portion 14C of the casing 14.

The discharge chamber 144 discharges the refrigerant R compressed by the compression mechanism 11 to the outside.

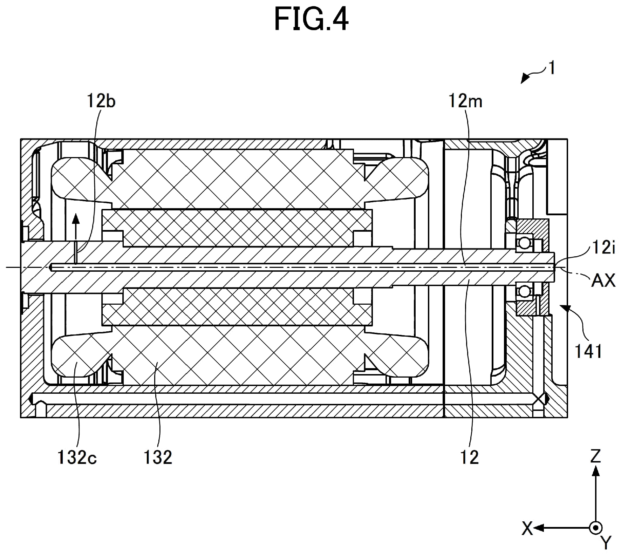

The rotation shaft 12 will be described in detail. FIG. 4 is an enlarged sectional view around the rotation shaft 12 in the screw compressor 1, which is an example of the screw compressor according to the present embodiment. The rotation shaft 12 has a main flow path 12m (first flow path) extending in the axial direction (X-axis direction) and a branch flow path 12b (second flow path) branching from the main flow path 12m.

The main flow path 12m communicates with the suction chamber 141. The main flow path 12m is provided along the axial center AX of the rotation shaft 12. The main flow path 12m has an opening 12i opening into the suction chamber 141. The refrigerant R flows into the main flow path 12m through the opening 12i.

The branch flow path 12b is provided downstream of the rotation shaft 12. The branch flow path 12b is provided along a direction perpendicular to the rotational axis of the rotation shaft 12. The refrigerant R flowing into the main flow path 12m is discharged from the branch flow path 12b toward the coil end 132c of the stator 132. The refrigerant R may be discharged from the branch flow path 12b toward the stator core of the stator 132.

According to the screw compressor according to the present embodiment, the motor is cooled by the refrigerant discharged from the second flow path of the rotation shaft, thereby enhancing the cooling effect of the motor by the refrigerant.

### <First modified example>

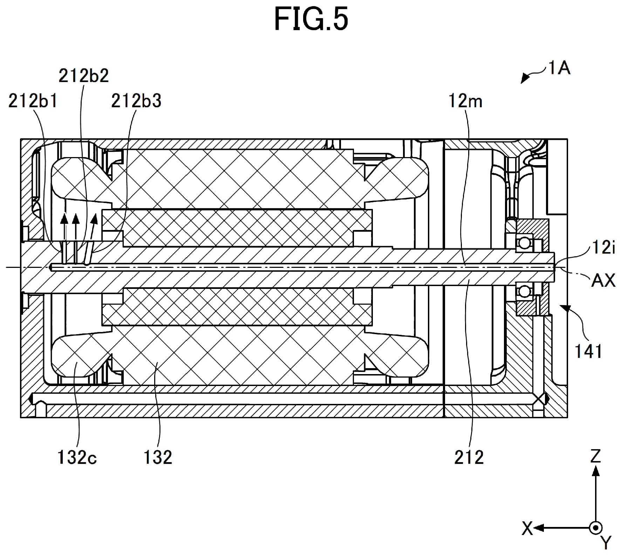

A description will be given of a first modified example of the screw compressor according to the present embodiment in which the rotation shaft is different. FIG. 5 is an enlarged cross-sectional view around the rotation shaft 212 in the screw compressor 1A, which is an example of the first modified example of the screw compressor according to the present embodiment. The screw compressor 1A is provided with a rotation shaft 212 in place of the rotation shaft 12 for the screw compressor 1. The rotation shaft 212 has a main flow path 12m (first flow path) extending in the axial direction (X-axis direction), a branch flow path 212b1 branching from the main flow path 12m, a branch flow path 212b2, and a branch flow path 212b3. That is, the rotation shaft 212 in the screw compressor 1A includes a plurality of branch flow paths (second flow paths) whose positions in the axial direction (X-axis direction) are different from each other.

A description of the main flow path 12m is omitted here, as reference can be made to the description of the rotation shaft 12. This is also the case in the descriptions of the following modified examples.

The branch flow paths 212b1, 212b2, and 212b3 are arranged side by side in the axial direction of the rotation shaft 212 in order from the downstream side. The diameters of the branch flow paths 212b1, 212b2, and 212b3 are different from each other.

According to the first modified example of the screw compressor according to the present embodiment, the cooling effect of the motor by the refrigerant can be further enhanced by providing the plurality of second flow paths. According to the first modified example of the screw compressor according to the present embodiment, the cooling effect of the motor by the refrigerant can be further enhanced in a wider range. Furthermore, according to the first modified example of the screw compressor according to the present embodiment, by making the diameters of the plurality of second flow paths different, the amount of refrigerant discharged can be changed in accordance with the degree of increase in the temperature of the motor, and the cooling of the motor can be made more efficient.

### <Second modified example>

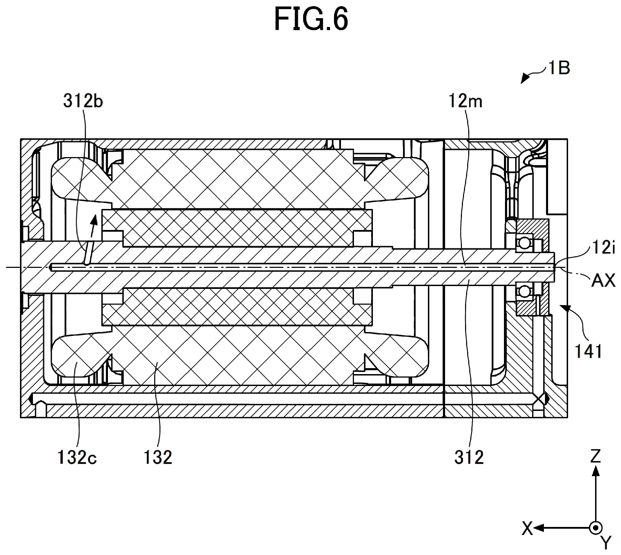

A second modified example of the screw compressor according to the present embodiment in which the rotation shaft is different will be described. FIG. 6 is an enlarged sectional view around the rotation shaft 312 of the screw compressor 1B, which is an example of the first modified example of the screw compressor according to the present embodiment. The screw compressor 1B is provided with a rotation shaft 312 in place of the rotation shaft 12 for the screw compressor 1. The rotation shaft 312 has a main flow path 12m extending in the axial direction (X-axis direction) and a branch flow path 312b branching from the main flow path 12m.

The branch flow path 312b is inclined so as to intersect a plane (a plane parallel to the YZ plane) perpendicular to the axial direction (X-axis direction).

According to the second modified example of the screw compressor according to the present embodiment, the cooling effect of the motor by the refrigerant can be further enhanced by expanding the range for discharging the refrigerant.

### <Third modified example>

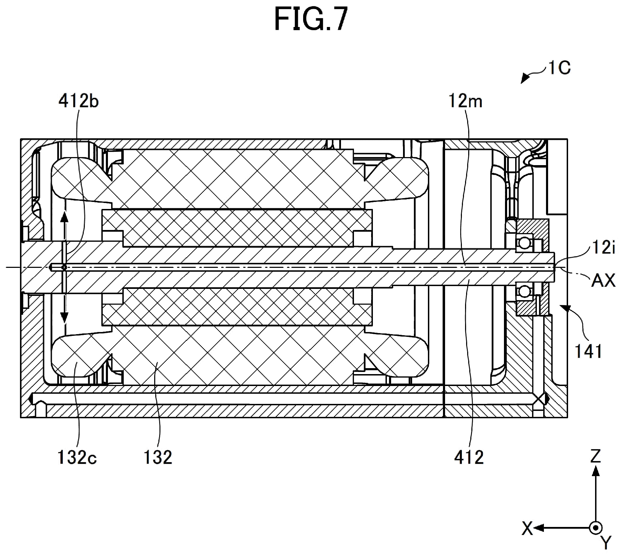

A third modified example of the screw compressor according to the present embodiment in which the rotation shaft is different will be described. FIG. 7 is an enlarged cross-sectional view around the rotation shaft 412 of the screw compressor 1C, which is an example of the first modified example of the screw compressor according to the present embodiment. The screw compressor 1C is provided with a rotation shaft 412 in place of the rotation shaft 12 for the screw compressor 1. The rotation shaft 412 has a main flow path 12m extending in the axial direction (X-axis direction) and a plurality of branch flow paths 412b branching from the main flow path 12m.

The plurality of branch flow paths 412b are provided at intervals of 90° in the circumferential direction of the rotation shaft 412. That is, the plurality of branch flow paths 412b have different positions in the circumferential direction.

According to the third modified example of the screw compressor according to the present embodiment, the cooling effect of the motor can be further enhanced in the circumferential direction by providing a plurality of second flow paths in the circumferential direction of the rotation shaft.

### <Fourth modified example>

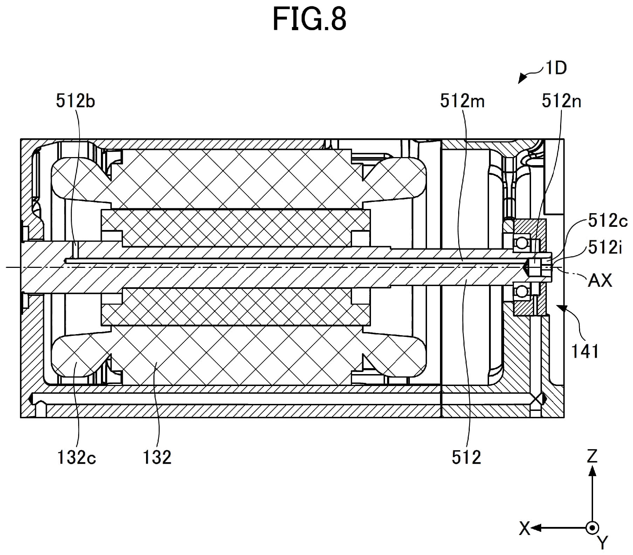

A fourth modified example of the screw compressor according to the present embodiment in which the rotation shaft is different will be described. FIG. 8 is an enlarged cross-sectional view around the rotation shaft 512 in the screw compressor 1D, which is an example of the first modified example of the screw compressor according to the present embodiment. The screw compressor 1D has a rotation shaft 512 in place of the rotation shaft 12 for the screw compressor 1. The rotation shaft 512 has a main flow path 512m extending in the axial direction (X-axis direction) and a branch flow path 512b branching from the main flow path 512m.

The main flow path 512m is provided on the suction chamber 141 side of the rotation shaft 512 and is connected to a recessed portion 512n rotationally symmetric about the axial center AX of the rotation shaft 512. The main flow path 512m is provided eccentrically with respect to the axial center AX of the rotation shaft 512.

A plate 512c having an opening 512i formed at the center thereof is attached to the suction chamber 141 side of the recessed portion 512n. The refrigerant R flowing in from the opening 512i flows into the main flow path 512m through the recessed portion 512n. Because the main flow path 512m is provided eccentrically with respect to the recessed portion 512n, the main flow path 512m and the recessed portion 512n act as an eccentric pump.

According to the fourth modified example of the screw compressor according to the present embodiment, by providing the first flow path at a position eccentric to the axial center of the rotation shaft to act as an eccentric pump, the amount of the refrigerant to be discharged can be increased, and the cooling effect of the motor by the refrigerant can be further enhanced.

According to the screw compressor according to the present embodiment, the cooling effect of the motor by the refrigerant can be enhanced.

Embodiments have been described above, but it will be understood that various changes in form and details are possible without departing from the spirit and scope of the claims. Various modifications and improvements, such as combinations or substitutions with parts or all of other embodiments, are possible.

This application claims priority to Basic Patent Application No. 2024-161484, filed in the Japan Patent Office on September 18, 2024, the entire contents of which are hereby incorporated by reference.

### Reference Signs List

1, 1A, 1B, 1C, 1D screw compressor
2 refrigerant circuit
3 condenser
4 first expansion valve
5 gas-liquid separator
6 second expansion valve
7 evaporator
8 injection mechanism
9 controller
10 refrigeration apparatus
11 compression mechanism
12 rotation shaft
12b, 212b1, 212b2, 212b3, 312b, 412b, 512b branch flow path
12i, 512i opening
12m, 512m main flow path
512n recessed portion
13 motor
14 casing
14a suction port
14e discharge port
14f filter
14r1, 14r2 rib
14s support member
15A first bearing
15B second bearing
15C third bearing
19 inverter unit
51 refrigerant outlet
52 injection port
81 injection pipe
82 solenoid valve
83 branch pipe
84 flow control valve
111 screw rotor
112 gate rotor
131 rotor
132 stator
132c coil end
141 suction chamber
142 motor chamber
143 rotor chamber
144 discharge chamber
191 inverter
191a terminal portion
192 cooling portion
193 cover
R refrigerant

## Claims

1. A screw compressor (1, 1A, 1B, 1C, 1D) comprising:
a compression mechanism (11) including a screw rotor (111) and configured to compress a refrigerant (R);
a rotation shaft (12, 212, 312, 412, 512) to which the screw rotor (111) is fixed;
a motor (13) configured to rotate the rotation shaft (12, 212, 312, 412, 512); and
a casing (14) having a suction chamber (141) configured to introduce the refrigerant (R) from outside, a rotor chamber (143) configured to house the compression mechanism (11), and a motor chamber (142) configured to house the motor (13) and positioned between the suction chamber (141) and the rotor chamber (143), wherein
the rotation shaft (12, 212, 312, 412, 512) includes:
a first flow path (12m, 512m) that communicates with the suction chamber (141) and that extends along a first direction (X-axis direction) that is an axial direction; and
a second flow path (12b, 212b1, 212b2, 212b3, 312b, 412b, 512b) that communicates with the motor chamber (142) and the first flow path (12m, 512m) and that extends along a second direction intersecting the first direction (X-axis direction).

2. The screw compressor (1A, 1C) according to claim 1, wherein the rotation shaft (212, 412) includes a plurality of the second flow paths (212b1, 212b2, 212b3, 412b).

3. The screw compressor (1A) according to claim 2, wherein the plurality of the second flow paths (212b1, 212b2, 212b3) have different positions in the first direction (X-axis direction).

4. The screw compressor (1C) according to claim 2 or 3, wherein the plurality of second flow paths (412b) have different positions in a circumferential direction of the rotation shaft (412).

5. The screw compressor (1A) according to any one of claims 2 to 4, wherein the plurality of second flow paths (212b1, 212b2, 212b3) have different diameters.

6. The screw compressor (1A, 1B) according to any one of claims 1 to 5, wherein the second flow paths (212b3, 312b) are inclined so as to intersect a plane perpendicular to the rotation shaft (212, 312).

7. The screw compressor (1D) according to any one of claims 1 to 6, wherein the first flow path (512m) is provided at a position eccentric to an axial center (AX) of the rotation shaft (512).

8. The screw compressor (1, 1A, 1B, 1C, 1D) according to any one of claims 1 to 7, wherein the refrigerant (R) includes at least one of R1234ze, R1234yf, ammonia, or propane as a refrigerant component.

9. The screw compressor (1, 1A, 1B, 1C, 1D) according to any one of claims 1 to 8, wherein the screw compressor is operated under a condition where the compression ratio is 7 or more.

10. A refrigeration apparatus (10) comprising:
the screw compressor (1, 1A, 1B, 1C, 1D) according to any one of claims 1 to 9.
